# EUROPÄISCHE PATENTSCHRIFT

(11) **EP 1 755 919 B1**
(45) Veröffentlichungstag und Bekanntmachung des Hinweises auf die Patenterteilung: **17.03.2010**
(21) Anmeldenummer: 05769816.9
(22) Anmeldetag: 14.06.2005
(51) Int. Cl.: B60N 2/56, A47C 7/74, A47C 27/14

(54) **SITZEINSATZ, INSBESONDERE FÜR EINEN SITZ EINES KRAFTFAHRZEUGS ODER EINES FLUGZEUGS**
SEAT INSERT, IN PARTICULAR FOR A SEAT OF A MOTOR VEHICLE OR AN AEROPLANE
GARNITURE DE SIEGE, NOTAMMENT POUR UN SIEGE DE VEHICULE ROUTIER OU D'AVION

(30) Priorität: 16.06.2004 DE 102004029062
(43) Veröffentlichungstag der Anmeldung: 28.02.2007
(73) Patentinhaber: METZELER SCHAUM GMBH, 87700 Memmingen (DE)
(72) Erfinder: SCHNEIDER, Wolfgang G., 88085 Langenargen (DE); HEITMANN, Ulrich, 87700 Memmingen (DE)
(74) Vertreter: Schober, Christoph D.
(86) Internationale Anmeldenummer: PCT/EP2005/052749
(87) Internationale Veröffentlichungsnummer: WO 2005/123448

(56) Entgegenhaltungen:
- WO-A-2004/041585
- DE-A1- 3 119 999
- DE-A1- 3 617 816
- DE-A1- 3 705 756
- DE-A1- 10 023 548

## Beschreibung

Die Erfindung betrifft einen Sitzeinsatz, der insbesondere bei einem Sitz eines Kraftfahrzeugs oder eines Flugzeugs Anwendung finden kann. Der Sitzeinsatz ist mit einer gasdichten Hülle versehen, die ein Volumen zumindest teilweise einschliesst und eine Innenfläche und eine Aussenfläche aufweist. Zudem weist der Sitzeinsatz ein Ventil auf, durch das die Menge eines in dem Volumen vorhandenen Gases regulierbar ist. Die Hülle weist wenigstens einen Klimatisierungsabschnitt auf, der mit einer Perforation versehen ist.

Die Erfindung bezieht sich ferner auf einen Sitz, bei dem ein solcher Sitzeinsatz Anwendung findet. Unter einem Sitz im Sinne der vorliegenden Erfindung werden sämtliche Arten von Polstern verstanden, die dazu dienen, den menschlichen Körper abzustützen, insbesondere auch Liegematten.

Um einen Wärme- und Feuchtigkeitsstau zwischen dem Körper einer Person und einem Sitz, der den Körper abstützt, zu vermeiden, ist aus der DE 37 05 756 A1 ein Kissen bekannt, aus dem ein den menschlichen Körper kühlender und die Körperfeuchtigkeit abtransportierender Luftstrom austritt. Das in das Sitzteil und/oder die Rückenlehne des Sitzes integrierte oder als separate Sitzauflage ausgebildete Kissen weist eine sich aus zwei Gewebebahnen zusammensetzende Hülle, die ein von einem Luftstrom durchströmtes Volumen einschliesst, auf. Die Gewebebahnen werden durch senkrecht zu den Gewebebahnen verlaufende Polfäden in einem konstanten Abstand voneinander gehalten und sind auf der Oberseite und der Unterseite des Kissens mit einer elastomeren, luftdichten Beschichtung versehen. Die Ränder der Gewebebahnen sind durch eine umlaufende Naht luftdicht miteinander verbunden. Die Beschichtung auf der Oberseite des Kissens ist mit einer Perforation versehen, durch die ein dem Kissen über einen Füllstutzen zugeführter Luftstrom entweichen kann. Um eine gleichmässige Verteilung des aus dem Kissen austretenden Luftstroms zu erreichen, ist auf der Perforation eine luftdurchlässige Pufferschicht angeordnet. Die Pufferschicht kann durch ein Vlies, einen luftdurchlässigen Schaumstoff oder einen luftdurchlässigen Bezug des Sitzes gebildet werden. Um ein Zusammendrücken des Kissens zu verhindern, ist es erforderlich, dass in dem Kissen ein Überdruck von ca. 10 kPa bis ca. 60 kPa aufrechterhalten wird. Die Polfäden verhindern, dass das Kissen infolge des Überdrucks eine wulstige Form annimmt. Als Nachteil des bekannten Kissens hat sich erwiesen, dass das Kissen bei einer Druckbeaufschlagung durch den Körper einer Person zwar eine gleichmässige Verteilung des Drucks bewirkt, eine Dämpfung aber nicht stattfindet. Das Kissen bietet daher einen unzureichenden Sitz- oder Liegekomfort.

Demgegenüber offenbart die DE 33 06 871 A1 ein für den Sitz eines Kraftfahrzeugs Anwendung findendes Polster, das einen aus Polyurethan gefertigten Schaumstoffkern und eine luftdurchlässige Deckschicht aufweist. Die Deckschicht kann entweder durch einen luftdurchlässigen Bezug oder durch ein mit einer Schaumkaschierung versehenes Vlies gebildet werden. Der Schaumstoffkern ist mit Kanälen versehen, in denen zur Oberfläche des Schaumstoffkems offene Halbschalen angeordnet sind. Alternativ können in den Schaumstoffkem flexible Rohre eingeschäumt sein, die mit an der Oberfläche des Schaumstoffkems mündenden Bohrungen verbunden sind. Die Halbschalen oder Rohre ermöglichen es, durch die luftdurchlässige Deckschicht Luft von der Aussenfläche des Polsters abzusaugen, um einen Wärmestau an einer durch das Polster gebildeten Sitzfläche zu vermeiden. Die Integration der Halbschalen oder Rohre in den Schaumstaffkern ist mit einer vergleichsweise aufwendigen und kostenintensiven Fertigung verbunden.

Weiterhin offenbart die DE 42 11 895 A1 einen Sitz, der mit einem von einer Polsterauflage verdeckten Sitzeinsatz versehen ist. Der Sitzeinsatz weist ein aus einem porösen, elastischen Schaumstoff bestehendes Polsterelement und eine das Polsterelement einschließende Hülle auf. Das Polsterelement grenzt zwar an die Hülle an, ist mit dieser aber nicht verbunden, so dass das Polsterelement innerhalb der Hülle beweglich ist und damit einen geringeren Widerstand gegen den von einem Benutzer ausgeübten Druck aufweist. Auf diese Weise werden Verhärtungen des Sitzeinsatzes bei einer Benutzung verhindert. Die Hülle ist mit einem Druckerzeuger verbunden, mittels dem ein Überdruck oder ein Unterdruck innerhalb des Sitzeinsatzes erzeugt werden kann.

Einen Bezug für Sitze eines Kraftfahrzeugs, der einen luftdurchlässigen, aus gewebtem Polyamidgarn bestehenden Abschnitt aufweist, wird in der EP 0 206 152 B1 beschrieben. Der auf einem Polster der Sitze angeordnete Bezug dient dazu, aus in dem Polster angeordneten Rohren austretende Luft an die Außenfläche des Sitzes strömen zu lassen, um eine Klimatisierung zu bewirken.

Ein Polsterelement für einen Kraftfahrzeugsitz, das mit einer von einer Luftströmung durchflutbaren Ventilationsschicht versehen ist, die aus einem offenporigen Schaumstoff bestehen kann, wird in der DE 100 23 548 A1 beschrieben. Die Ventilationsschicht stützt sich auf einer Schicht des Polsterelements ab, die wiederum auf einem Polsterträger des Fahrzeugsitzes zur Auflage kommt. Zwischen diesen Schichten ist eine geschlossene Begrenzungsfläche angeordnet, um einen Luftaustausch zwischen den Schichten zu unterbinden. Die Oberseite der Ventilationsschicht ist mit einem luftdurchlässigen Bezug aus Textilmaterial oder perforiertem Leder überzogen. Zwischen der Ventilationsschicht und dem luftdurchlässigen Bezug ist eine Bezugsfüllung eingearbeitet. Die geschlossene Begrenzungsfläche ist als luftundurchlässige Beschichtung ausgestaltet, die durch eine lackartige oder lösungsmittelartige Substanz, beispielsweise einem Polyurethanlack, gebildet und mittels einer Lackiertechnik, insbesondere durch Spritzlackierung, aufgebracht wird. Die luftundurchlässige Beschichtung kann jedoch auch bei der Formgebung des Polsterelements erzeugt werden, indem vor einem Aufschäumen des Polstermaterials eine Deckschicht auf die Oberfläche eines Schäumwerkzeugs aufgebracht wird, so dass sich beim anschließenden Aufschäumen eines noch flüssigen Weichschaums der Weichschaum mit der Deckschicht verbindet.

Der Erfindung liegt die Aufgabe zugrunde, einen Sitzeinsatz der eingangs genannten Art dahingehend weiterzubilden, dass sich bei einer vergleichsweise einfachen und kostengünstigen Fertigung ein relativ hoher Sitz- oder Liegekomfort erzielen lässt. Zudem soll ein Sitz geschaffen werden, der eine ausreichende Klimatisierung eines durch den Sitz abgestützten Körpers gewährleistet.

Diese Aufgabe wird durch einen Sitzeinsatz mit den Merkmalen gemäß Anspruch 1 und einen Sitz mit den Merkmalen gemäß Anspruch 20 gelöst. Vorteilhafte Ausgestaltungen des erfindungsgemäßen Sitzeinsatzes und des beanspruchten Sitzes werden in den Ansprüchen 2 bis 19 und 21 bis 23 definiert.

Der erfindungsgemäße Sitzeinsatz beruht auf der Erkenntnis, dass ein Polsterelement, das aus einem offenzelligen Weichschaumstoff besteht und stoffschlüssig mit der Innenfläche der Hülle verbunden ist, zum einen einen verhältnismässig hohen Sitz- oder Liegekomfort bietet. Denn der Weichschaumstoff verleiht dem Polsterelement eine Elastizität, die beim Abstützen des Körpers einer Person eine Dämpfung hervorruft. Zum anderen gewährleistet die offenzellige Struktur des Weichschaumstoffs eine ausreichende Durchlässigkeit des Polsterelements, die das Vorsehen von beispielsweise luftleitenden Rohren in dem Polsterelement, wie es im Stand der Technik üblich ist, entbehrlich macht. Eine verhältnismässig einfache und kostengünstige Fertigung des Sitzeinsatzes ist sichergestellt.

Erfindungsgemäß besteht der Weichschaumstoff aus Polyurethan, das sich sowohl als Heissformschaum oder Kaltformschaum als auch als Blockschaum verarbeiten lässt. Um eine vergleichsweise hohe elastische Verformungsfähigkeit des Polsterelements, die zu einem hohen Sitz- und Liegekomfort beiträgt, zu gewährleisten, hat der Weichschaumstoff erindungsgemäß ein Raumgewicht zwischen ca. 15 kg/m³ und ca. 90 kg/m³, vorzugsweise zwischen ca. 30 kg/m³ und ca. 50 kg/m³. Ausserdem hat es sich als vorteilhaft erwiesen, wenn der Weichschaumstoff eine Stauchhärte zwischen ca. 1,5 kPa und ca. 10 kPa, vorzugsweise zwischen ca. 2,5 kPa und ca. 5,0 kPa, hat.

Weiterhin ist es von Vorteil, wenn das Polsterelement eine Dicke hat, die zwischen ca. 3,0 mm und ca. 30,0 mm, vorzugsweise zwischen ca. 5,0 mm und ca. 15,0 mm, beträgt. Der Sitzeinsatz ist auf diese Weise vergleichsweise dünn und lässt sich infolgedessen ohne weiteres in einen Sitz integrieren oder als separate Sitzauflage ausbilden.

Bevorzugt setzt sich die Perforation aus einer Vielzahl an Löchern zusammen, die einen Durchmesser zwischen ca. 0,1 mm und ca. 5,0 mm haben. Die Löcher können einen gleichen Durchmesser haben und äquidistant angeordnet sein, um eine besonders einfache und kostengünstige Fertigung zu ermöglichen. Alternativ können die Löcher einen unterschiedlichen Durchmesser haben und in unterschiedlichen Abständen voneinander angeordnet sein, um eine physiologischen und ergonomischen Anforderungen entsprechende Perforation zu bilden. Der Durchmesser und die Anzahl der Löcher bestimmen zusammen mit dem in dem Volumen herrschenden Druck des Gases die Grösse des durch den Sitzeinsatz strömenden Volumenstroms, der beispielsweise ca. 100 l/min beträgt.

Um ein körpergerechtes Design des Sitzeinsatzes zu erreichen, ist vorteilhafterweise das Polsterelement aus einem Formschaum gefertigt. Alternativ kann das Polsterelement aus einem Blockschaum hergestellt sein, um eine vergleichsweise kostengünstige Fertigung zu erreichen. Ein Formschaum bietet im Unterschied zu einem Blockschaum jedoch eine hohe Flexibilität hinsichtlich der Formgebung des Polsterelements, so dass sich dem Sitzeinsatz, dessen Kontur hauptsächlich durch das Polsterelement bestimmt wird, ein Design verleihen lässt, das auch in ästhetischer Hinsicht ansprechend ist. In diesem Zusammenhang hat es sich ausserdem als vorteilhaft erwiesen, die Innenfläche der Hülle und das Polsterelement durch Hinterschäumen miteinander zu verbunden. Das Hinterschäumen, das heisst eine sich beim Schäumen des Polsterelements ergebende stoffschlüssige Verbindung mit der Hülle, trägt zu einer variablen Formgebung des Polsterelements und damit der Kontur des Sitzeinsatzes bei.

Von Vorteil ist es, wenn die Hülle eine Folie ist, die vorzugsweise aus Polyurethan, Polyamid oder Polyethylen besteht. Eine derartige Folie ist ausreichend elastisch und lässt sich in einer Schäumform, in der das Polsterelement geschäumt wird, tiefziehen, um ein praxisgerechtes Hinterschäumen zu ermöglichen. Alternativ kann die Hülle ein Gewebe sein, das mit einer gasdichten Beschichtung versehen ist, wie es aus der DE 37 05 756 A1 bekannt ist.

In einer bevorzugten Ausgestaltung des erfindungsgemässen Sitzeinsatzes ist die Aussenfläche der Hülle mit einem luftdurchlässigen Bezug versehen. Der beispielsweise aus Textilien gefertigte Bezug trägt zu einem ansprechenden optischen Erscheinungsbild des Sitzeinsatzes bei, so dass sich der Sitzeinsatz als Sitzauflage, die in Art eines Schonbezugs auf einem Sitz angeordnet werden kann, ausgestalten lässt. Der Bezug ist zweckmässigerweise elastisch ausgestaltet und kann zu diesem Zweck mit einer Schaumstoffschicht kaschiert sein.

Zweckmässig ist ferner, das Ventil auswechselbar an der Hülle anzuordnen, um eine praxisgerechte Wartung und ein einfaches Recycling zu ermöglichen. Das Ventil ist vorteilhafterweise mit einer Pumpe verbunden, durch die das Volumen auf einen vorgegebenen Unterdruck evakuiert oder auf einen vorgegebenen Überdruck mit dem Gas gefüllt werden kann. Wird in dem Volumen ein Unterdruck erzeugt, der bezogen auf den Umgebungsdruck zweckmässigerweise zwischen ca. 1,0 kPa und ca. 100 kPa, vorzugsweise zwischen ca. 5,0 kPa und ca. 30 kPa, beträgt, dann wird durch den Sitzeinsatz Luft abgesaugt, wie es in der DE 33 06 871 A1 beschrieben ist. Wird hingegen in dem Volumen ein Überdruck erzeugt, der zweckmässigerweise bezogen auf den Umgebungsdruck ebenfalls zwischen ca. 1,0 kPa und ca. 100 kPa, vorzugsweise zwischen ca. 5,0 kPa und ca. 30 kPa, beträgt, dann tritt aus dem Sitzeinsatz ein Gasstrom aus, der, wie in der DE 37 05 756 A1 beschrieben, eine Klimatisierung bewirkt. Der Gasstrom, bei dem es sich im einfachsten Fall um Luft oder um ein mit beispielsweise Aromastoffen aufbereitetes Gas handelt, kann zu diesem Zweck erwärmt oder gekühlt sein.

In einer bevorzugten Ausgestaltung des efindungsgemässen Sitzeinsatzes ist das Volumen in eine Vielzahl an hermetisch voneinander getrennte Kammern unterteilt, wobei in den Kammern jeweils ein Polsterelement angeordnet ist. Zudem ist den Kammern jeweils ein Klimatisierungsabschnitt zugeordnet, so dass durch die Kammern Volumenströme unterschiedlicher Grösse und Richtung strömen können, um eine an individuelle Bedürfnisse angepasste Klimatisierung hervorzurufen.

Einzelheiten und weitere Vorteile der vorliegenden Erfindung ergeben sich aus der nachfolgenden Beschreibung eines bevorzugten Ausführungsbeispiels. In der das Ausführungsbeispiel lediglich schematisch darstellenden Zeichnung veranschaulichen im einzelnen:
- Fig. 1: eine perspektivische Ansicht eines Sitzeinsatzes und
- Fig. 2: ein Sitz, in den der Sitzeinsatz gemäss Fig. 1 integriert ist.

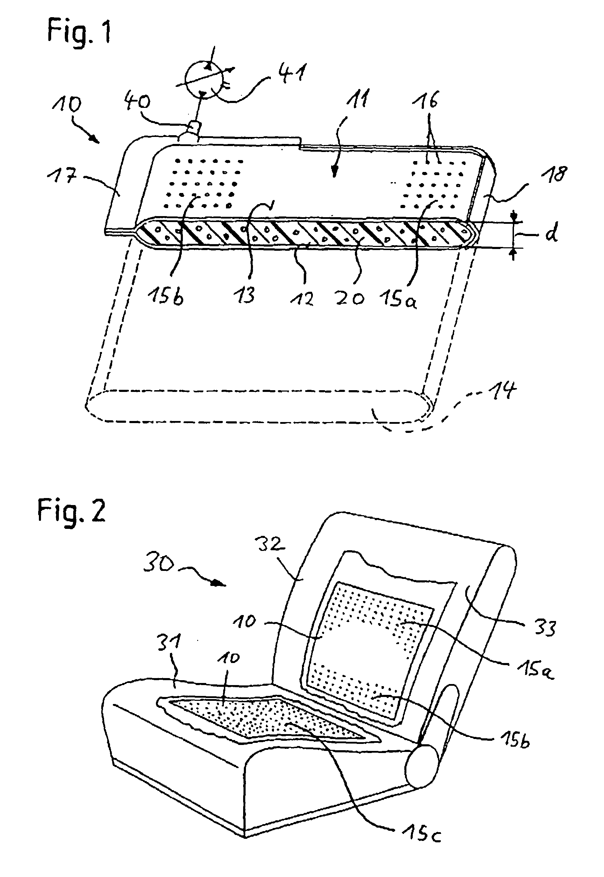

Der in Fig. 2 dargestellte Sitz 30 setzt sich aus einem Sitzteil 31 und einer Rückenlehne 32 zusammen. Das Sitzteil 31 und die Rückenlehne 32 weisen jeweils einen Grundkörper auf, der mit einem beispielsweise aus Textilien gefertigten Bezug 33 bespannt ist. Der vor allem für ein Kraftfahrzeug Anwendung findende Sitz 30 ist sowohl im Bereich des Sitzteils 31 als auch im Bereich der Rückenlehne 32 mit einem Sitzeinsatz 10 versehen. Der Sitzeinsatz 10 ist zwischen dem Grundkörper und dem luftdurchlässig ausgestalteten Bezug 33 angeordnet.

Wie Fig. 1 zu erkennen gibt, ist der Sitzeinsatz 10 mit einer gasdichten Hülle 11 versehen, die eine Innenfläche 12 und eine Aussenfläche 13 aufweist. Die durch eine Folie, die beispielsweise aus Polyurethan oder Polyethylen besteht, oder ein Gewebe, das mit einer gasdichten, beispielsweise elastomeren Beschichtung versehen ist, gebildete Hülle 11 schliesst ein Volumen 14 ein, in dem sich ein Polsterelement 20 befindet.

Das mit der Innenfläche 12 der Hülle 11 stoffschlüssig verbundene Polsterelement 20 ist aus einem offenzelligen Weichschaumstoff gefertigt. Der Weichschaumstoff besteht aus Polyurethan und hat ein Raumgewicht zwischen ca. 15 kg/m³ und ca. 90 kg/m³. Im vorliegenden Fall beträgt das Raumgewicht beispielsweise ca. 30 kg/m³. Die Stauchhärte des Weichschaumstoffs beläuft sich auf einen Wert zwischen ca. 1,5 kPa und ca. 10 kPa und beträgt beispielsweise zwischen ca. 2,5 kPa und ca. 5,0 kPa.

Das Polsterelement 20, dessen Dicke d zwischen ca. 3,0 mm und ca. 30,0 mm beträgt, ist aus einem Formschaum gefertigt. Zu diesem Zweck kann eine Folie, welche die Hülle 11 bildet, in einer Schäumform, welche die Kontur des Polsterelements 10 hat, mittels eines an die Schäumform angelegten Vakuums tiefgezogen werden. Anschliessend wird ein Reaktionsgemisch in die Schäumform eingefüllt und das Polsterelement 20 in der Schäumform derart geschäumt, dass die Folie beziehungsweise die Hülle 11 hinterschäumt wird. Durch das Hinterschäumen ergibt sich ein zuverlässiger Stoffschluss zwischen der Folie und dem Polsterelement 20. Im Anschluss an das Hinterschäumen wird das durch das Polsterelement 20 und die Folie gebildete Formteil aus der Schäumform entnommen. Wenn der Sitzeinsatz 10 über eine vergleichsweise komplexe Form verfügt, können mehrere Formteile zur Bildung des Sitzeinsatzes 10 miteinander verbunden werden. Zu diesem Zweck werden die Folien der Formteile, welche die Hülle 11 bilden, entlang einer Naht 17 miteinander verschweisst. Zusätzlich können die Polsterelemente 20 der Formteile miteinander verklebt werden.

Handelt es sich bei der Hülle 11 hingegen um ein beschichtetes Gewebe, das an der Innenfläche 12 mit dem Polsterelement 20 verklebt ist, dann ist es zweckmässig, zwei aneinandergrenzende Randbereiche der Hülle 11 zusätzlich durch ein Band 18 abzudichten.

Der Sitzeinsatz 10 dient dazu, eine Klimatisierung eines durch den Sitz 30 abgestützten Körpers einer Person zu ermöglichen. Zu diesem Zweck weist die Hülle 11 Klimatisierungsabschnitte 15a, 15b, 15c auf, die mit einer Perforation 16 versehen sind. Die Perforation 16 setzt sich aus einer Vielzahl an Löchern zusammen, die je nach Anwendungsfall einen Durchmesser zwischen ca. 0,1 mm und ca. 5,0 mm haben können. Die Perforation 16 ermöglicht einen Volumenstrom zwischen dem Volumen 14 und der Atmosphäre.

Hierfür ist es erforderlich, dass in dem Volumen 14 entweder ein Unterdruck von beispielsweise 50 kPa bezogen auf den Umgebungsdruck oder ein Überdruck von beispielsweise ebenfalls 50 kPa bezogen auf den Umgebungsdruck herrscht. Um die Druckdifferenz zwischen dem Volumen 14 und der Atmosphäre zu erzeugen, ist an der Hülle 11 ein Ventil 40 angeordnet, durch das die Menge der in dem Volumen 14 vorhandenen Luft regulierbar ist. Das zum Beispiel als variables Drosselventil mit Druckbegrenzung ausgestaltete Ventil 40 ist mit einer Pumpe 41 verbunden, durch die das Volumen auf einen vorgegebenen Unterdruck evakuiert oder auf einen vorgegebenen Überdruck aufgepumpt werden kann. In Abhängigkeit von dem Durchmesser und der Anzahl der Löcher der Perforation 16 und der zwischen dem Volumen 14 und der Atmosphäre herrschenden Druckdifferenz lässt sich ein Volumenstrom einstellen, der beispielsweise 100 I/min beträgt.

Der Luftstrom tritt bei einem in dem Volumen 14 herrschenden Überdruck im Bereich der Klimatisierungsabschnitte 15a, 15b, 15c aus dem Sitzeinsatz 10 aus und strömt durch den luftdurchlässigen Bezug 33 des Sitzes 30. Der beispielsweise mittels einer Klimaanlage des Kraftfahrzeugs je nach Anwendungsfall erwärmte oder abgekühlte Luftstrom ermöglicht, einen Wärme- und Feuchtigkeitsstau zwischen dem Körper einer Person und dem den Körper abstützenden Sitz 30 zu vermeiden. Eine angenehme Klimatisierung kann auch dadurch erreicht werden, dass in dem Volumen 14 ein Unterdruck erzeugt wird, so dass durch den Sitzeinsatz 10 Luft von der Aussenfläche des Sitzes 30 abgesaugt wird. Darüber hinaus ist es möglich, in den einzelnen Klimatisierungsabschnitten 15a, 15b, 15c unterschiedlich grosse und/oder gerichtete Volumenströme zu erzeugen, um eine individuelle oder den physiologischen und ergonomischen Anforderungen entsprechende Klimatisierung zu bewirken. Zu diesem Zweck kann das Volumen 14 des Sitzeinsatzes 10 in eine Vielzahl an hermetisch voneinander getrennte Kammern unterteilt sein, die mit separaten Ventilen 40, die unabhängig voneinander steuerbar sind, verbunden sind.

Der zuvor beschriebene Sitz 30 zeichnet sich durch den eine Klimatisierung hervorrufenden Sitzeinsatz 10 aus. Der Süzeinsatz 10 lässt sich vergleichsweise einfach und kostengünstig fertigen und trägt zu einem hohen Sitz- oder Liegekomfort bei. Dies ist vor allem auf das aus einem offenzelligen Weichschaumstoff gefertigte Polsterelement 20 zurückzuführen. Die offenzellige Struktur des Weichschaumstoffs gewährleistet zum einen, dass sich in dem Volumen 14 eine für die Erzeugung des gewünschten Überdrucks oder Unterdrucks erforderliche Menge an Luft speichern lässt, und zum anderen, dass der Sitzeinsatz 10 über eine für den geforderten Volumenstrom ausreichende Durchlässigkeit verfügt.

### Bezugszeichenliste

- 10: Sitzeinsatz,
- 11: Hülle
- 12: Innenfläche
- 13: Aussenfläche
- 14: Volumen
- 15a: Klimatisierungsabschnitt
- 15b: Klimatisierungsabschnitt
- 15c: Klimatisierungsabschnitt
- 16: Perforation
- 17: Naht
- 18: Band

- 20: Polsterelement

- 30: Sitz
- 31: Sitzteil
- 32: Rückenlehne
- 33: Bezug

- 40: Ventil
- 41: Pumpe

- d: Dicke

## Patentansprüche

1. Sitzeinsatz, insbesondere für einen Sitz (30) eines Kraftfahrzeugs oder eines Flugzeugs, mit
einer gasdichten Hülle (11), die ein Volumen (14) zumindest teilweise einschliesst und eine Innenfläche (12) und eine Aussenfläche (13) aufweist, und
einem Ventil (40), durch das die Menge eines in dem Volumen (14) vorhandenen Gases regulierbar ist;
wobei die Hülle (11) wenigstens einen Klimatisierungsabschnitt (15a, 15b, 15c) aufweist, der mit einer Perforation (16) versehen ist;
**gekennzeichnet durch** ein Polsterelement (20), das aus einem offenzelligen Weichschaumstoff besteht und stoffschlüssig mit der Innenfläche (12) der Hülle (11) verbunden ist;
wobei der Weichschaumstoff aus Polyurethan besteht und ein Raumgewicht zwischen ca. 15 kg/m³ und ca. 90 kg/m³ und eine Stauchhärte zwischen ca. 1,5 kPa und ca. 10 kPa hat.

2. Sitzeinsatz nach Anspruch 1, **dadurch gekennzeichnet, dass** der Weichschaumstoff ein Raumgewicht zwischen ca. 30 kg/m³ und ca. ca. 50 kg/m³ hat.

3. Sitzeinsatz nach Anspruch 1 oder 2, **dadurch gekennzeichnet, dass** der Weichschaumstoff eine Stauchhärte zwischen ca. 2,5 kPa und ca. 5 kPa hat.

4. Sitzeinsatz nach einem der Ansprüche 1 bis 3, **dadurch gekennzeichnet, dass** das Polsterelement (20) eine Dicke (d) hat, die zwischen ca. 3,0 mm und ca. 30,0 mm beträgt.

5. Sitzeinsatz nach Anspruch 4, **dadurch gekennzeichnet, dass** das Polsterelement (20) eine Dicke (d) hat, die zwischen ca. 5,0 mm und ca. 15,0 mm beträgt.

6. Sitzeinsatz nach einem der Ansprüche 1 bis 5, **dadurch gekennzeichnet, dass** sich die Perforation (16) aus einer Vielzahl an Löchern zusammensetzt, die einen Durchmesser zwischen ca. 0,1 mm und ca. 5,0 mm haben.

7. Sitzeinsatz nach Anspruch 6, **dadurch gekennzeichnet, dass** die Löcher den gleichen Durchmesser haben und äquidistant angeordnet sind.

8. Sitzeinsatz nach einem der Ansprüche 1 bis 7, **dadurch gekennzeichnet, dass** das Polsterelement (20) aus einem Formschaum gefertigt ist.

9. Sitzeinsatz nach Anspruch 8, **dadurch gekennzeichnet, dass** die Innenfläche (12) der Hülle (11) und das Polsterelement (20) durch Hinterschäumen miteinander verbunden sind.

10. Sitzeinsatz nach einem der Ansprüche 1 bis 7, **dadurch gekennzeichnet, dass** das Polsterelement (20) aus einem Blockschaum gefertigt ist.

11. Sitzeinsatz nach einem der Ansprüche 1 bis 10, **dadurch gekennzeichnet, dass** die Hülle (11) eine Folie ist.

12. Sitzeinsatz nach Anspruch 11, **dadurch gekennzeichnet, dass** die Folie (11) aus Polyurethan, Polyamid oder Polyethylen besteht.

13. Sitzeinsatz nach einem der Ansprüche 1 bis 10, **dadurch gekennzeichnet, dass** die Hülle (11) ein Gewebe ist, das mit einer gasdichten Beschichtung versehen ist.

14. Sitzeinsatz nach einem der Ansprüche 1 bis 13, **dadurch gekennzeichnet, dass** die Aussenfläche (13) der Hülle (11) mit einem luftdurchlässigen Bezug (33) versehen ist.

15. Sitzeinsatz nach einem der Ansprüche 1 bis 14, **dadurch gekennzeichnet, dass** das Ventil (40) auswechselbar an der Hülle (11) angeordnet ist.

16. Sitzeinsatz nach einem der Ansprüche 1 bis 15, **dadurch gekennzeichnet, dass** das Ventil (40) mit einer Pumpe (41) verbunden ist, durch die das Volumen (14) auf einen vorgegebenen Unterdruck evakuierbar oder auf einen vorgegebenen Überdruck mit dem Gas füllbar ist.

17. Sitzeinsatz nach Anspruch 16, **dadurch gekennzeichnet, dass** der Unterdruck oder der Überdruck bezogen auf den Umgebungsdruck zwischen ca. 1,0 kPa und ca. 100 kPa betragen.

18. Sitzeinsatz nach Anspruch 17, **dadurch gekennzeichnet, dass** der Unterdruck oder der Überdruck bezogen auf den Umgebungsdruck zwischen ca. 5,0 kPa und ca. 30 kPa betragen.

19. Sitzeinsatz nach einem der Ansprüche 1 bis 18, **dadurch gekennzeichnet, dass** das Volumen (14) in eine Vielzahl an hermetisch voneinander getrennte Kammern unterteilt ist, wobei in den Kammern jeweils ein Polsterelement (20) angeordnet ist und wobei den Kammern jeweils ein Klimatisierungsabschnitt (15a, 15b, 15c) zugeordnet ist.

20. Sitz, insbesondere für ein Kraftfahrzeugsitz oder ein Flugzeug, mit einem Sitzteil (31) und einer Rückenlehne (32), **gekennzeichnet durch** einen Sitzeinsatz (10) nach einem der Ansprüche 1 bis 19.

21. Sitz nach Anspruch 20, **dadurch gekennzeichnet, dass** das Sitzteil (31) und/oder die Rückenlehne (32) einen Grundkörper, der mit einem Bezug (33) bespannt ist, aufweisen.

22. Sitz nach Anspruch 21, **dadurch gekennzeichnet, dass** der Sitzeinsatz (10) zwischen dem Grundkörper und dem Bezug (33) angeordnet ist.

23. Sitz nach Anspruch 21, **dadurch gekennzeichnet, dass** der Sitzeinsatz (10) auf dem Bezug (33) angeordnet ist.

## Claims

1. A seat insert, in particular for a seat (30) of a motor vehicle or an aircraft, comprising
a gas-tight envelope (11) at least partially enclosing a volume (14) and having an inner surface (12) and an outer surface (13), and
a valve (40), by which the amount of gas present within the volume (14) can be regulated;
wherein the envelope (11) has at least one conditioning section (15a, 15b, 15c) provided with a perforation (16);
**characterised by** a cushion element (20), which consists of an openpore soft foam and is adhesively bonded to the inner surface (12) of the envelope (11);
wherein the soft foam is of polyurethane and has a relative density of between about 15 kg/m³ and about 90 kg/m³ and a compression hardness of between about 1.5 kPa and about 10 kPa.

2. The seat insert according to claim 1, **characterised in that** the soft foam has a relative density of between about 30 kg/m³ and about 50 kg/m³.

3. The seat insert according to claim 1 or 2, **characterised in that** the soft foam has a compression hardness of between about 2.5 kPa and about 5 kPa.

4. The seat insert according to any one of claims 1 to 3, **characterised in that** the cushion element (20) has a thickness (d) of between about 3.0 mm and about 30.0 mm.

5. The seat insert according to claim 4, **characterised in that** the cushion element (20) has a thickness (d) of between about 5.0 mm and about 15.0 mm.

6. The seat insert according to any one of claims 1 to 5, **characterised in that** the perforation (16) is comprised of a plurality of holes having a diameter of between about 0.1 mm and about 5.0 mm.

7. The seat insert according to claim 6, **characterised in that** the holes have the same diameter and are equidistantly arranged.

8. The seat insert according to any one of claims 1 to 7, **characterised in that** the cushion element (20) is made of a moulded foam.

9. The seat insert according to claim 8, **characterised in that** the inner surface (12) of the envelope (11) and the cushion element (20) are bonded to each other by means of back-foaming.

10. The seat insert according to any one of claims 1 to 7, **characterised in that** the cushion element (20) of made of a block foam.

11. The seat insert according to any one of claims 1 to 10, **characterised in that** the envelope (11) is a film.

12. The seat insert according to claim 11, **characterised in that** the film (11) is of polyurethane, polyamide or polyethylene.

13. The seat insert according to any one of claims 1 to 10, **characterised in that** the envelope (11) is a fabric provided with a gas-tight coating.

14. The seat insert according to any one of claims 1 to 13, **characterised in that** the outer surface (13) of the envelope (11) is provided with an air-permeable cover (33).

15. The seat insert according to any one of claims 1 to 14, **characterised in that** the valve (40) is exchangeably arranged at the envelope (11).

16. The seat insert according to any one of claims 1 to 15, **characterised in that** the valve (40) is connected to a pump (41) enabling the volume (14) to be evacuated to a predetermined negative pressure or to be filled with gas to a predetermined positive pressure.

17. The seat insert according to claim 16, **characterised in that** the negative pressure or the positive pressure relative to the ambient pressure are between about 1.0 kPa and about 100 kPa.

18. The seat insert according to claim 17, **characterised in that** the negative pressure or the positive pressure relative to the ambient pressure are between about 5.0 kPa and about 100 kPa.

19. The seat insert according to any one of claims 1 to 18, **characterised in that** the volume (14) is subdivided into a plurality of hermetically separated chambers, wherein one cushion element (20) is arranged in each of the chambers and wherein one conditioning section (15a, 15b, 15c) is associated with each of the chambers.

20. A seat, in particular for a motor vehicle seat or an aircraft, comprising a seat portion (31) and a backrest (32), **characterised by** a seat insert (10) according to any one of claims 1 to 19.

21. The seat according to claim 20, **characterised in that** the seat portion (31) and/or the backrest (32) comprise a base body covered by a cover (33).

22. The seat according to claim 21, **characterised in that** the seat insert (10) is arranged between the base body and the cover (33).

23. The seat according to claim 21, **characterised in that** the seat insert (10) is arranged on the cover (33).

## Revendications

1. Garniture de siège, en particulier pour un siège (30) d'un véhicule automobile ou d'un avion, comprenant
une enveloppe étanche aux gaz (11) qui enferme au moins partiellement un volume (14) et qui présente une surface intérieure (12) et une surface extérieure (13), et
une valve (40) au moyen de laquelle il est possible de réguler la quantité d'un gaz présent dans le volume ;
dans laquelle l'enveloppe (11) comprend au moins un tronçon de climatisation (15a, 15b, 15c) qui est pourvu d'une perforation (16) ;
**caractérisée par** un élément de rembourrage (20) qui est constitué en un matériau en mousse souple à cellules ouvertes et qui est relié à coopération de matières avec la surface intérieure (12) de l'enveloppe (11),
dans laquelle le matériau en mousse souple est du polyuréthane et présente un poids volumique entre environ 15 kg/m³ et environ 90 kg/m³ et présente une dureté à l'écrasement entre environ 1,5 kPa et environ 10 kPa.

2. Garniture de siège selon la revendication 1, **caractérisée en ce que** le matériau en mousse souple présente un poids volumique entre environ 30 kg/m³ et environ 50 kg/m³.

3. Garniture de siège selon la revendication 1 ou 2, **caractérisée en ce que** le matériau en mousse souple présente une dureté à l'écrasement entre environ 2,5 kPa et environ 5 kPa.

4. Garniture de siège selon l'une des revendications 1 à 3, **caractérisée en ce que** l'élément de rembourrage (20) a une épaisseur (d) qui s'élève entre environ 3,0 mm et environ 30,0 mm.

5. Garniture de siège selon la revendication 4, **caractérisée en ce que** l'élément de rembourrage (20) a une épaisseur (d) qui s'élève entre environ 5,0 mm et environ 15,0 mm.

6. Garniture de siège selon l'une des revendications 1 à 5, **caractérisée en ce que** la perforation (16) se compose d'une pluralité de trous qui ont un diamètre entre environ 0,1 mm et environ 5,0 mm.

7. Garniture de siège selon la revendication 6, **caractérisée en ce que** les trous ont le même diamètre et sont agencés de manière équidistante.

8. Garniture de siège selon l'une des revendications 1 à 7, **caractérisée en ce que** l'élément de rembourrage (20) est réalisé à partir d'une mousse moulée.

9. Garniture de siège selon la revendication 8, **caractérisée en ce que** la surface intérieure (12) de l'enveloppe (11) et l'élément de rembourrage (20) sont reliés l'un à l'autre par moussage postérieur.

10. Garniture de siège selon l'une des revendications 1 à 7, **caractérisée en ce que** l'élément de rembourrage (20) est formé d'une mousse en bloc.

11. Garniture de siège selon l'une des revendications 1 à 10, **caractérisée en ce que** l'enveloppe (11) est une feuille.

12. Garniture de siège selon la revendication 11, **caractérisée en ce que** la feuille (11) est en polyuréthane, polyamide ou polyéthylène.

13. Garniture de siège selon l'une des revendications 1 à 10, **caractérisée en ce que** l'enveloppe (11) est un textile qui est pourvu d'un revêtement étanche aux gaz.

14. Garniture de siège selon l'une des revendications 1 à 13, **caractérisée en ce que** la surface extérieure (13) de l'enveloppe (11) est pourvu d'un doublage (33) perméable à l'air.

15. Garniture de siège selon l'une des revendications 1 à 14, **caractérisée en ce que** la valve (40) est agencée de façon interchangeable sur l'enveloppe (11).

16. Garniture de siège selon l'une des revendications 1 à 15, **caractérisée en ce que** la valve (40) est reliée à une pompe (41) au moyen de laquelle le volume (14) peut être évacué à une dépression prédéterminée ou peut être rempli avec le gaz jusqu'à une surpression prédéterminée.

17. Garniture de siège selon la revendication 16, **caractérisée en ce que** la dépression ou la surpression s'élève, par référence à la pression environnante, entre environ 1,0 kPa et environ 100 kPa.

18. Garniture de siège selon la revendication 17, **caractérisée en ce que** la dépression ou la surpression s'élève, par référence à la pression environnante, entre environ 5,0 kPa et environ 30 kPa.

19. Garniture de siège selon l'une des revendications 1 à 18, **caractérisée en ce que** le volume (14) est subdivisé en une pluralité de chambres séparées hermétiquement les unes des autres, un élément de rembourrage (20) étant agencé dans chaque chambre, et un tronçon de climatisation (15a, 15b, 15c) étant associé à chaque chambre.

20. Siège, en particulier pour un véhicule automobile ou pour un avion, comprenant une partie d'assise (31) et un dossier (32), **caractérisée par** une garniture de siège (10) selon l'une des revendications 1 à 19.

21. Siège selon la revendication 20, **caractérisée en ce que** la partie d'assise (31) et/ou le dossier (32) comprennent un corps de base qui est revêtu d'un doublage (33).

22. Siège selon la revendication 21, **caractérisée en ce que** la garniture de siège (10) est agencée entre le corps de base et le doublage (33).

23. Siège selon la revendication 21, **caractérisée en ce que** la garniture de siège (10) est agencée sur le doublage (33).
